# EUROPEAN PATENT SPECIFICATION

(11) **EP 1 652 751 B1**
(45) Date of publication and mention of the grant of the patent: **21.10.2009**
(21) Application number: 05023193.5
(22) Date of filing: 24.10.2005
(51) Int. Cl.: B62D 5/083, B62D 6/10

(54) **Power steering apparatus**
Hilfskraftlenkung
Direction assistée

(30) Priority: 26.10.2004 JP 2004310717
(43) Date of publication of application: 03.05.2006
(73) Proprietor: JTEKT Corporation, Osaka-shi Osaka 542-8502 (JP)
(72) Inventor: Kotake, Yoshimi, Chuo-ku Osaka-shi Osaka 542-8502 (JP); Hotta, Masato, Chuo-ku Osaka-shi Osaka 542-8502 (JP)
(74) Representative: Hering, Hartmut

(56) References cited:
- EP-A- 1 081 016
- EP-A1- 0 612 652
- EP-A1- 0 701 940
- EP-A1- 1 647 467
- DE-U1- 20 316 602

## Description

The present invention relates to a power steering apparatus in which the steering assist characteristics are varied in accordance with the twisting of a torsion bar corresponding to the steering torque.

Such apparatus is known from DE 203 16 602 U1 or from EP 1 647 467 A1, as basis for the preamble of claim 1 and 2.

In the hydraulic power steering apparatus used in the past, an input shaft connected to the steering wheel and an output shaft connected to the vehicle wheels used for steering via a rack and pinion type steering gear or the like are coaxially connected by a torsion bar so that elastic relative rotation between these shafts is generated in accordance with the steering torque, an inner valve element is coaxially fitted in a tubular outer valve element so that relative rotation of these valve elements is generated in accordance with the relative rotation angle between the input and output shafts, and a hydraulic actuator generating steering assist force is controlled in accordance with this relative rotation angle between these valve elements.

In such a hydraulic power steering apparatus, it was proposed to provide a pressing member which rotates together with the output shaft so as to be displaceable in the radial direction of the shaft, and an elastic body which applies elastic force for pressing this pressing member against a pressed part formed on the outer circumference of the torsion bar (see Japanese Patent Application Laid-Open No. 1998-329733). In this prior art, when the steering torque is less than a set value, the twisting between one end of the torsion bar and the pressed part is restricted by the pressing of the pressed part with the pressing member, so that the effective length of the torsion bar is shortened. When the steering torque is equal to or greater than this set value, this pressing is released, so that the effective length of the torsion bar is lengthened. As a result, the rigidity of the torsion bar is substantially increased in a case where the steering torque is not more than the set value compared to a case where the steering torque exceeds the set value, so that the running stability of the vehicle in the case of straight forward motion can be improved.

Alternatively, in such a hydraulic power steering apparatus, it was proposed to provide a mechanism which applies elastic force oriented in a direction to inhibit the relative rotation between the input and output shafts so that the elastic force increases as the relative rotation angle increases (see Japanese Patent Publication No. 1996-505336). In this prior art, the rigidity of the torsion bar is substantially increased as the steering torque increases, so that the running stability of the vehicle during turning motion can be improved.

In the abovementioned prior arts, the rigidity of the torsion bar is substantially increased only in a case where the relative rotation angle between the input and output shafts is small or in a case where this relative rotation angle is large. Accordingly, the running stability of the vehicle cannot be improved both during straight forward motion and during turning motion. Furthermore, if the rigidity of the torsion bar is simply increased, the ratio of the variation in the steering assist force to the variation in the steering torque becomes small, so that quick steering assist cannot be accomplished and the feeling of steering operation deteriorates. It is an object of the present invention to provide a power steering apparatus which can solve the abovementioned problems in the prior arts.

The power steering apparatus of the present invention comprises an input shaft; an output shaft; a torsion bar which connects the input shaft with the output shaft coaxially so that elastic relative rotation between these shafts is generated in accordance with steering torque; an actuator for generating steering assist force; a first rotating element which is capable of relative coaxial rotation to the input and output shafts; a second rotating element which rotates together with the input shaft; a rotation conversion mechanism which converts the relative rotation of the input shaft to the output shaft into relative rotation of the first rotating element to the output shaft; and a control mechanism which controls the actuator so that steering assist force corresponding to the relative rotation angle between the two rotating elements is generated, wherein the rotation conversion mechanism has a reversing element which is supported by the output shaft, when the relative rotation of the input shaft to the output shaft is converted into relative rotation of the first rotating element to the output shaft, the direction of rotation is reversed by the reversing element, and the ratio of the amount of relative rotation between the two rotating elements to the amount of relative rotation between the input and output shafts is set as an invariable fixed value.

In the present invention, when the input shaft rotates relatively to the output shaft in accordance with the steering torque, this relative rotation is converted into relative rotation of the first rotating element to the output shaft by the rotation conversion mechanism, wherein the direction of rotation is reversed by the abovementioned reversing element. Specifically, the direction of relative rotation of the input shaft to the output shaft and the direction of relative rotation of the first rotating element to the output shaft are mutually opposite directions. Accordingly, relative rotation of the first rotating element to the second rotating element which rotates together with the input shaft is generated. The actuator for generating steering assist force is controlled by the control mechanism so that steering assist force corresponding to the relative rotation angle between the two rotating elements is generated. Compared to a case in which the first rotating element rotates together with the output shaft, the relative rotation angle between the two rotating elements is increased by an amount corresponding to the amount of the relative rotation of the first rotating element to the output shaft. Accordingly, since the relative rotation angle between the two rotating elements can be increased without increasing the relative rotation angle between the input and output shafts, the running stability of the vehicle can be improved both during straight forward motion and during turning motion by increasing the rigidity of the torsion bar. Moreover, since there is no decrease in the ratio of the variation in the steering assist force to the variation in the steering torque, the feeling of steering operation can be improved by quick steering assist. In addition, since the ratio of the amount of relative rotation between the two rotating element to the amount of relative rotation between the input and output shafts is set as an invariable fixed value, the structure used for rotation conversion can be simplified, so that this rotation conversion can be smoothly performed, and quick steering assist can be accomplished to improve the feeling of steering operation.

It is desirable that the first rotating element has a tubular shape, the second rotating element is fitted in the first rotating element so that relative coaxial rotation is possible, the rotation conversion mechanism has a first supporting part which rotates together with the input shaft, a second supporting part which rotates together with the output shaft, and a third supporting part which rotates together with the first rotating element, the respective supporting parts are spaced from each other in the axial direction of the input and output shafts, a swinging member is provided as the reversing element, the swinging member is supported by the first supporting part so as to swing in accordance with the relative rotation between the input and output shafts, supported by the output shaft via the second supporting part, and supported by the third supporting part so as to cause the first rotating element to rotate relatively to the second rotating element by the swinging thereof, and the second supporting part is disposed between the first supporting part and the third supporting part in the axial direction of the input and output shafts. Consequently, as a result of the relative rotation between the input and output shafts, the first supporting part which rotates together with the input shaft displaces in the circumferential direction relatively to the second supporting part which rotates together with the output shaft, and the swinging member which is supported by the first supporting part and second supporting part swings. As a result of the swinging of this swinging member, the first rotating element which rotates together with the third supporting part supporting the swinging member rotates relatively to the second rotating element which rotates together with the input shaft.

It is desirable that the rotation conversion mechanism has an input side gear which rotates together with the input shaft, and a driven side gear which rotates together with the first rotating element, an intermediate gear which engages with the input side gear and the driven side gear is provided as the reversing element so as to be rotatably supported by the output shaft, and when the relative rotation of the input shaft to the output shaft is converted into relative rotation of the first rotating element to the output shaft, the direction of rotation is reversed by the intermediate gear. As a result, since the intermediate gear which engages with the input side gear rotating together with the input shaft is rotatably supported by the output shaft, the intermediate gear is caused to rotate by the relative rotation between the input and output shafts, and the driven side gear which engages with the intermediate gear rotates together with the first rotating element. Specifically, the intermediate gear converts the relative rotation of the input shaft to the output shaft into the relative rotation of the first rotating element to the output shaft with reversing the direction of rotation. Accordingly, relative rotation between the first rotating element and the second rotating element is generated.

In the present invention, the spring rigidity of the torsion bar in a power steering apparatus which applies steering assist force in accordance with the twisting angle of the torsion bar can be increased without greatly increasing the number of parts and the manufacturing cost, so that the steering can be prevented from becoming unstable both during straight forward motion and during turning motion of the vehicle, stable running conditions can be realized, and favorable feeling of steering operation can be obtained.

### Brief Description of the Drawings

Fig. 1 is a longitudinal sectional view of a hydraulic power steering apparatus constituting a first embodiment of the present invention;
Fig. 2 is a cross-sectional view of the control valve in the hydraulic power steering apparatus of the first embodiment of the present invention;
Fig. 3 shows the hydraulic circuit in the hydraulic power steering apparatus of the embodiments of the present invention;
Fig. 4 is a longitudinal sectional view of essential parts in the hydraulic power steering apparatus of the first embodiment of the present invention;
Fig. 5 is a longitudinal sectional view of essential parts of a hydraulic power steering apparatus in a modification of the first embodiment of the present invention;
Fig. 6 is a cross-sectional view of the hydraulic power steering apparatus in the modification of the first embodiment of the present invention;
Fig. 7 is a longitudinal sectional view of essential parts in an electric power steering apparatus constituting a second embodiment of the present invention; and
Fig. 8 is a structural explanatory diagram of the torque detection circuit in the electric power steering apparatus of the second embodiment of the present invention.

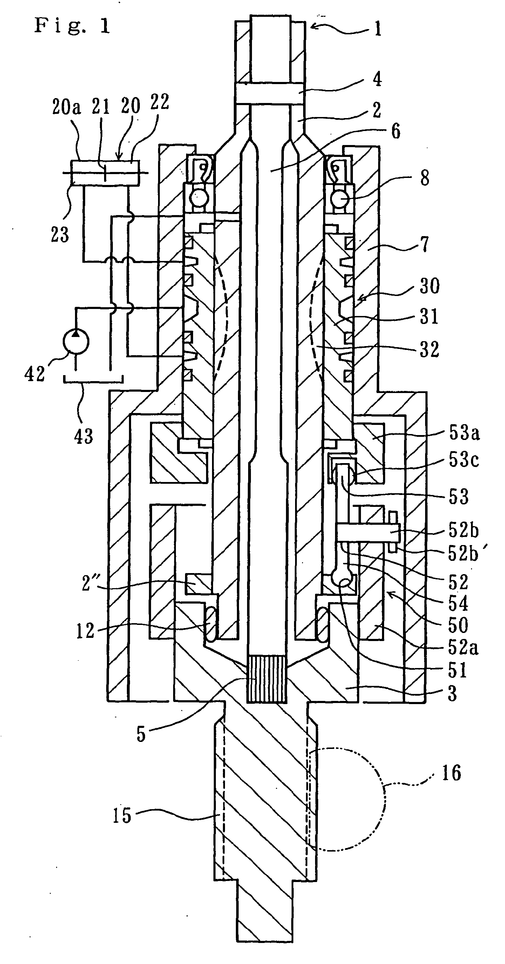

The rack and pinion type hydraulic power steering apparatus of the first embodiment according to the present invention shown in Fig. 1 comprises a tubular input shaft 2 connected to the steering wheel (not shown in the figures) of the vehicle, an output shaft 3, and a torsion bar 6 which connects the input shaft 2 with the output shaft 3 coaxially so that elastic relative rotation between these shafts is generated in accordance with the steering torque. The torsion bar 6 passes through the input shaft 2, and one end thereof is connected to the input shaft 2 via a pin 4 so as to rotate together with the input shaft 2 coaxially. The other end of the torsion bar 6 is inserted into a recessed part formed in one end of the output shaft 3, and is connected to the output shaft 3 by press fitting via serrations 5 so as to rotate together with the output shaft 3 coaxially. As a result, relative movement between the input shaft 2 and output shaft 3 in the axial direction is restricted.

One end of the input shaft 2 is supported by the housing 7 via a bearing 8, and the other end is supported by the inner circumference of the recessed part of the output shaft 3 via a bush 12. The output shaft 3 is rotatably supported by the housing of a rack and pinion type steering gear which is not shown in the figures. A pinion 15 is integrally formed on the outer circumference of the other end side of the output shaft 3. The steering gear has a rack 16 which engages with the pinion 15, and each end of the rack 16 is connected to the vehicle wheel via the tie rod, knuckle arm and others. As a result, the rotation of the input shaft 2 caused by steering operation is transmitted to the output shaft 3 via the torsion bar 6 so that the pinion 15 rotates, and the rack 16 moves in the lateral direction of the vehicle so that the steering angle varies.

A hydraulic cylinder 20 is provided as an actuator for generating steering assist force. This hydraulic cylinder 20 comprises a cylinder tube 20a and a piston 21 which is integrated with the rack 16. Oil chambers 22 and 23 which are partitioned by the piston 21 are formed inside the cylinder tube 20a.

A rotary type hydraulic pressure control valve 30 is provided to control the pressure of the hydraulic fluid supplied to the hydraulic cylinder 20. This control valve 30 has a tubular outer valve element 31 as a first rotating element, and an inner valve element 32 as a second rotating element which is coaxially fitted in the outer valve element 31 so that relative rotation is possible. The outer valve element 31 is inserted into the housing 7 so as to be capable of relative coaxial rotation to the input and output shafts 2 and 3. The inner valve element 32 is formed as an integral unit with the input shaft 2 so as to rotate together with the input shaft 2 coaxially.

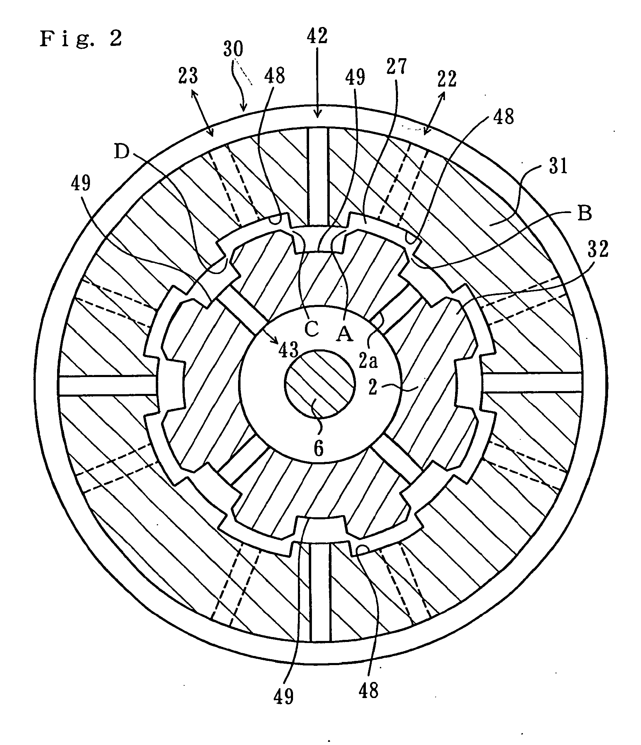

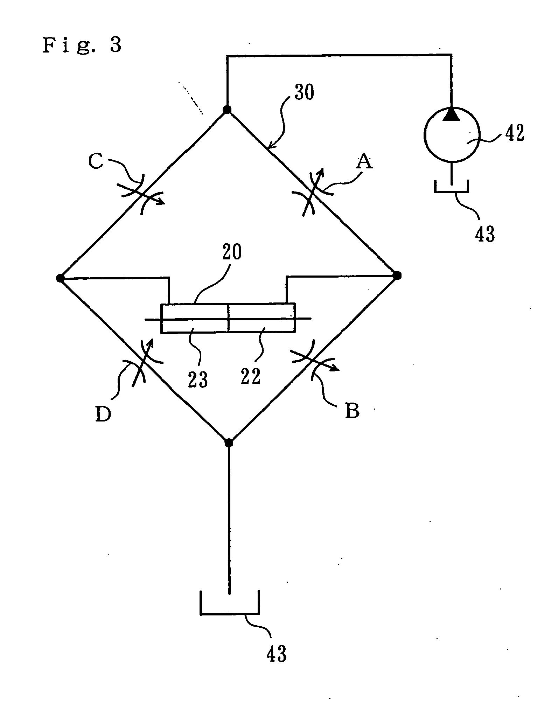

The pressure of the hydraulic fluid supplied to the hydraulic cylinder 20 varies in accordance with the relative rotation angle between the two valve elements 31 and 32. As a result, the control valve 30 constitutes a control mechanism which controls the hydraulic cylinder 20 so that steering assist force corresponding to the relative rotation angle between the two valve elements 31 and 32 is generated. Specifically, the housing 7 has a port connected to the hydraulic fluid discharge pump 42, a port connected to the tank 43, a port connected to one of the oil chambers 22 of the hydraulic cylinder 20, and a port connected to the other oil chamber 23, and these respective ports communicate with each other via flow passages between the outer valve element 31 and inner valve element 32. The degree of opening of throttle parts in the flow passages between the two valve elements 31 and 32 varies according to the relative rotation angle between the two valve elements 31 and 32. For example, as shown in Fig. 2, the spaces between\the edges of a plurality of first grooves 48 along in the axial direction in the inner circumference of the outer valve element 31 and the edges of a plurality of second grooves 49 along in the axial direction in the outer circumference of the inner valve element 32 serve as the throttle parts A, B, C and D. First grooves 48 which communicate with the one 22 of the oil chambers are spaced alternately with first grooves 48 which communicate with the other oil chamber 23 in the circumferential direction. Second grooves 49 which communicate with the pump 42 are spaced with alternately with second grooves 49 which communicate with the tank 43 via a through-hole 2a formed in the input shaft 2 and the space between the torsion bar 6 and the input shaft 2 in the circumferential direction. As a result, the hydraulic circuit shown in Fig. 3 is constituted. When steering operation is not being performed, the respective throttle parts A, B, C and D open so that the hydraulic pressure is not elevated; therefore no steering assist force is generated. In the case of steering to the right, the degree of opening of the throttle parts A and D increases and the degree of opening of the throttle parts B and C decreases in accordance with the relative rotation angle between the two valve elements 31 and 32, so that pressurized hydraulic fluid is supplied to the one 22 of the oil chambers and hydraulic fluid is circulated from the other oil chamber 23 into the tank 43; therefore the hydraulic cylinder 20 generates steering assist force which is oriented in the rightward direction in accordance with the relative rotation angle. In the case of steering to the left, the direction of relative rotation between the two valve elements 31 and 32 is the opposite of that in the case of steering to the right; therefore the degrees of opening of the throttle parts A, B, C and D are the opposite of those in the case of steering to the right, so that the hydraulic cylinder 20 generates steering assist force which is oriented in the leftward direction in accordance with the relative rotation angle.

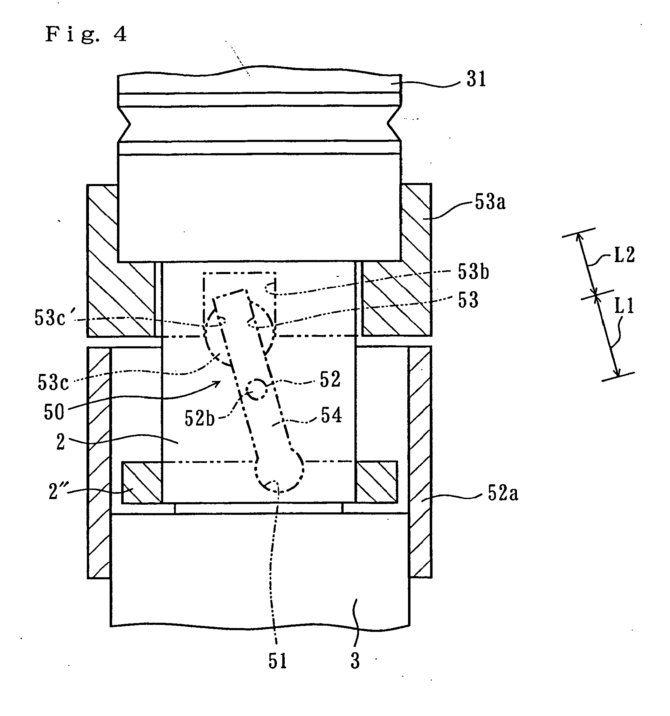

A rotation conversion mechanism 50 which converts relative rotation of the input shaft 2 to the output shaft 3 into relative rotation of the outer valve element 31 to the output shaft 3 is provided. As shown in Figs. 1 and 4, the rotation conversion mechanism 50 has a first supporting part 51 which rotates together with the input shaft 2, a second supporting part 52 which rotates together with the output shaft 3, a third supporting part 53 which rotates together with the outer valve element 31, and a swinging member 54 as a reversing element. The respective supporting parts 51, 52 and 53 are spaced from each other in the axial direction of the input and output shafts 2 and 3, and the second supporting part 52 is disposed between the first supporting part 51 and third supporting part 53. The first supporting part 51 is formed by a recessed part which is formed in one end of an annular member 2" integrated with the outer circumference of the input shaft 2, and the inner surface of the recessed part is formed along a spherical surface.

The second supporting part 52 has a tubular member 52a which is integrated with the outer circumference of the output shaft 3 by press fitting or the like and a supporting shaft 52b which is attached to this tubular member 52a. Alternatively, the tubular member 52a can be formed as an integral unit with the output shaft 3. The supporting shaft 52b is attached to the tubular member 52a so as to rotate about its own axis perpendicular to the axis of the input and output shafts 2 and 3, and is prevented from falling by means of a falling prevention member 52b' such as a pin, snap ring or the like.

The third supporting part 53 has a tubular member 53a which is integrated with the outer circumference of the outer valve element 31 by press fitting or the like and a receiving member 53c which is disposed inside a recessed part 53b formed in the end part of the tubular member 53a facing the annular member 2". A portion of the outer circumference of the receiving member 53c is formed along a spherical surface which contacts the inner surface of the recessed part 53b so that relative rotation is possible.

The swinging member 54 is supported by the first supporting part 51 and by the output shaft 3 via the second supporting part 52 so as to swing in accordance with the relative rotation between the input and output shafts 2 and 3. Furthermore, the swinging member 54 is supported by the third supporting part 53 so that relative rotation of the outer valve element 31 to the inner valve element 32 is generated by this swinging of the swinging member 54. Specifically, the outer circumferential part of the swinging member 54 is formed along a cylindrical surface, one end part thereof is formed along a spherical surface, and the other end part thereof is formed along a flat surface. The one end part of the swinging member 54 is fitted in the recessed part constituting the first supporting part 51, and contacts the inner surface of this recessed part so as to rotate together with the first supporting part 51. The other end part of the swinging member 54 is inserted into a retaining hole 53c' which passes through the receiving member 53c constituting the third supporting part 53, and the outer circumferential spherical surface of the receiving member 53c contacts the inner surface of the recessed part 53b so that the other end part of the swinging member 54 rotates together with the third supporting part 53. The part between both end parts of the swinging member 54 is integrated with the supporting shaft 52b of the second supporting part 52. A slight gap is formed between the outer circumference of the swinging member 54 and the retaining hole 53c' so that the swinging member 54 swings smoothly by the relative rotation between the input and output shafts 2 and 3, and the supporting shaft 52b is supported by the tubular member 52a via a slight gap so as to be capable of rotating.

In the abovementioned first embodiment, as a result of the relative rotation between the input and output shafts 2 and 3 in accordance with the steering torque, the first supporting part 51 which rotates together with the input shaft 2 displaces in the circumferential direction relatively to the second supporting part 52 which rotates together with the output shaft 3, and the swinging member 54 which is supported by the first and second supporting parts 51 and 52 swings. As a result of this swinging of the swinging member 54, the outer valve element 31 which rotates together with the third supporting part 53 supporting the swinging member 54 rotates relatively to the inner valve element 32 which rotates together with the input shaft 2. Specifically, when the input shaft 2 rotates relatively to the output shaft 3, this relative rotation is converted into relative rotation of the outer valve element 31 to the output shaft 3 by the rotation conversion mechanism 50, here the direction of rotation is reversed by the swinging member 54. Specifically, the direction of relative rotation of the input shaft 2 to the output shaft 3 and the direction of relative rotation of the outer valve element 31 to the output shaft 3 are mutually opposite directions. Accordingly, relative rotation of the outer valve element 31 to the inner valve element 32 which rotates together with the input shaft 2 is generated. The hydraulic cylinder 20 is controlled by the control valve 30 so that steering assist force corresponding to the relative rotation angle of the two valve elements 31 and 32 is generated. Compared to a case in which the outer valve element 31 rotates together with the output shaft 3, the relative rotation angle between the two valve elements 31 and 32 is increased by an amount corresponding to the amount of relative rotation between the outer valve element 31 and the output shaft 3. Accordingly, since the relative rotation angle between the two valve elements 31 and 32 can be increased without increasing the relative rotation angle between the input and output shafts 2 and 3, the running stability of the vehicle can be improved both during straight forward motion and during turning motion by increasing the rigidity of the torsion bar 6. Moreover, since there is no decrease in the ratio of the variation in the steering assist force to the variation in the steering torque, the feeling of steering operation can be improved by quick steering assist.

Furthermore, the ratio of the amount of relative rotation between the two valve elements 31 and 32 to the amount of relative rotation between the input and output shafts 2 and 3 is set as an invariable fixed value. For example, as shown in Fig. 4, the distance between the first supporting part 51 and second supporting part 52 is designated as L1, and the distance between the second supporting part 52 and third supporting part 53 is designated as L2. When relative rotation between the input and output shafts 2 and 3 is generated, the inner valve element 32 integrated with the input shaft 2 rotates relatively to the output shaft 3 in the same direction as the input shaft 2 by the same angle. Meanwhile, since the relative rotation between the input and output shafts 2 and 3 is transmitted to the outer valve element 31 via the swinging member 54, the outer valve element 31 rotates relatively to the output shaft 3 by an angle corresponding to the ratio L2/L1 in the opposite direction from the input shaft 2. Specifically, the ratio of the amounts of relative rotation between the two valve elements 31 and 32 is an invariable fixed value determined by L2/L1. Accordingly, the structure used for rotation conversion can be simplified, so that this rotation conversion can be smoothly performed, and quick steering assist can be accomplished to improve the feeling of steering operation.

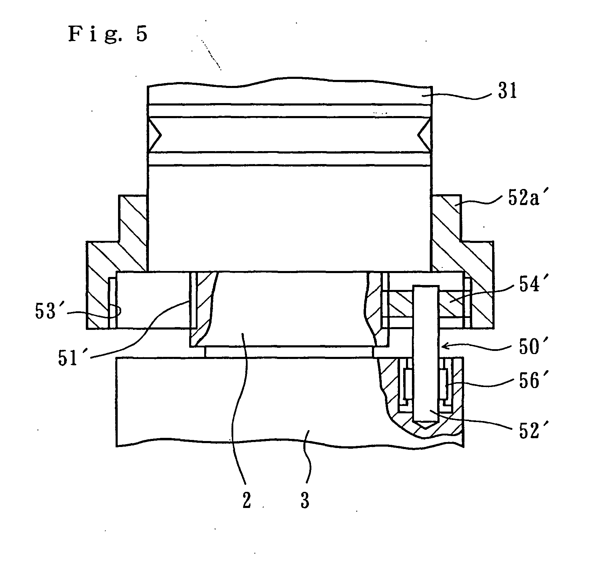

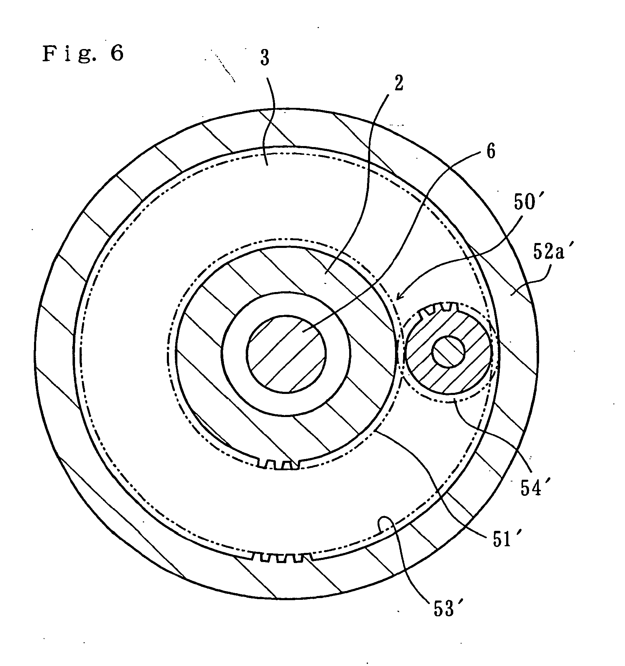

Figs. 5 and 6 show a rotation conversion mechanism 50' constituting a modification which differs from the abovementioned rotation conversion mechanism 50; here parts which are the same as in the first embodiment are indicated by the same reference numerals. The rotation conversion mechanism 50' of this modification has an input side gear 51' which rotates together with the input shaft 2 and a driven side gear 53' which rotates together with the outer valve element 31. The input side gear 51' is formed as a spur gear having external teeth which is integrated with the outer circumference of the input shaft 2. The driven side gear 53' of the present modification is formed as a spur gear having internal teeth integrated with the inner circumference of a tubular member 52a' integrated with the outer valve element 31 by press fitting or the like. The rotation conversion mechanism 50' has an intermediate gear 54' as a reversing element constituted by a spur gear which engages with the input side gear 51' and the driven side gear 53'. The intermediate gear 54' is integrated with a supporting shaft 52' which is rotatably supported by the output shaft 3 via a bearing 56', so that the intermediate gear 54' is supported by the output shaft 3 so as to be able to rotate about an axis parallel to the axis of the input and output shafts 2 and 3. As a result, since the intermediate gear 54' engaged with the input side gear 51' which rotates together with the input shaft 2 is rotatably supported by the output shaft 3, the intermediate gear 54' rotates by the relative rotation between the input and output shafts 2 and 3, and the driven side gear 53' engaged with the intermediate gear 54' rotates together with the outer valve element 31. Specifically, when the relative rotation of the input shaft 2 to the output shaft 3 is converted into relative rotation of the outer valve element 31 to the output shaft 3 by the intermediate gear 54', the direction of rotation is reversed. As a result, the direction of relative rotation of the input shaft 2 to the output shaft 3 and the direction of relative rotation of the outer valve element 31 to the output shaft 3 are mutually opposite directions. Accordingly, the outer valve element 31 rotates relatively to the inner valve element 32. Furthermore, the ratio of the amount of relative rotation between the two valve elements 31 and 32 to the amount of relative rotation between the input and output shafts 2 and 3 is an invariable fixed value which is determined by the numbers of teeth of the respective gears 51', 53' and 54'. The remaining constitution is the same as in the first embodiment. Furthermore, it is desirable to form the respective gears 51', 53' and 54' as profile shifted gears and to continuously vary the amount of profile shift along the direction of the tooth trace, so that each diameter of the deddendum circles in the input side gear 51' and the driven side gear 53' is gradually increased toward in one direction along the axis of rotation, and the diameter of the deddendum circle in the intermediate gear 54' is gradually increased toward in the other direction along the axis of rotation. As a result, it is possible to eliminate the backlash by adjusting the relative positions between the respective gears 51', 53' and 54' engaged with each other, so that the operation of the control valve 30 is made smoother and the steering characteristics are optimized.

In the abovementioned modification, the direction of relative rotation of the input shaft 2 constituting the force point to the output shaft 3 constituting the fulcrum of the intermediate gear 54' and the direction of relative rotation of the outer valve element 31 constituting the action point to the output shaft 3 are mutually opposite directions. Accordingly, since the relative rotation angle between the two valve elements 31 and 32 can be increased without increasing the relative rotation angle between the input and output shafts 2 and 3; therefore the running stability of the vehicle is improved both during straight forward motion and during turning motion by increasing the rigidity of the torsion bar 6. Furthermore, since there is no decrease in the ratio of the variation in the steering assist force to the variation in the steering torque, the feeling of steering operation can be improved by quick steering assist. In addition, since the ratio of the amount of relative rotation of the two valve elements 31 and 32 to the amount of relative rotation of the input and output shafts 2 and 3 is set as an invariable fixed value, the structure used for rotation conversion can be simplified, so that this rotation conversion can be smoothly performed, and quick steering assist can be accomplished to improve the feeling of steering operation.

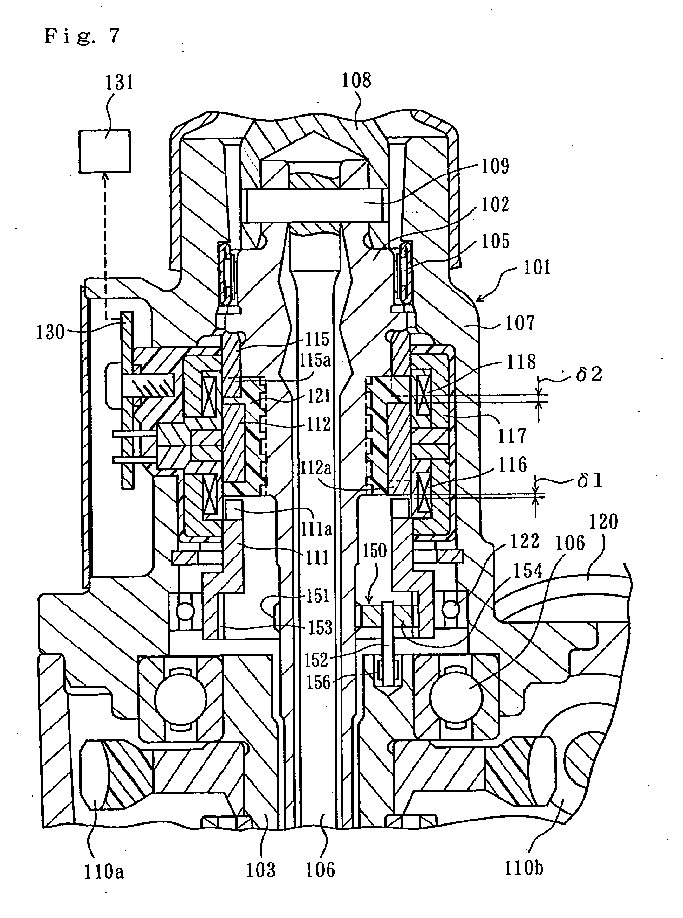

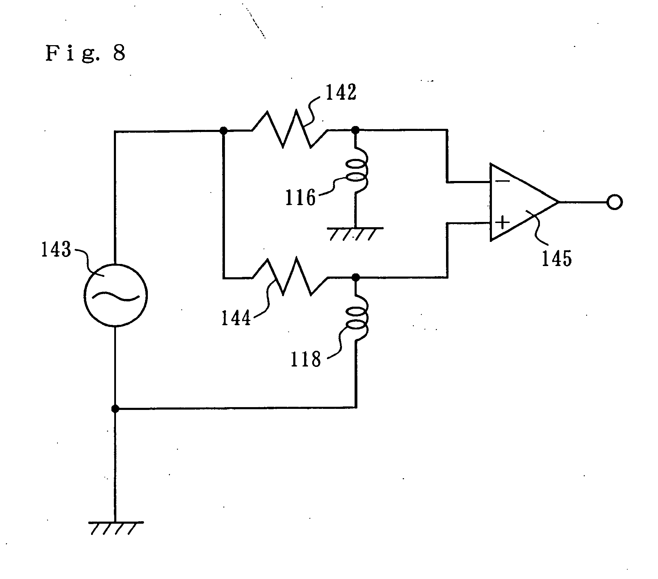

The electric power steering apparatus 101 constituting a second embodiment of the present invention shown in Figs. 7 and 8 comprises an input shaft 102, an output shaft 103, and a torsion bar 106 which connects the input shaft 102 with the output shaft 103 coaxially so that elastic relative rotation between these shafts is generated in accordance with the steering torque. The input shaft 102 and the output shaft 103 are made of magnetic material. The input shaft 102 is rotatably supported by the housing 107 via bearings 105, and is connected to the steering wheel (not shown in the figures) of the vehicle via a connecting shaft 108. The output shaft 103 is rotatably supported by the housing 107 via bearings 106, and is connected to the vehicle wheels via a steering gear (not shown in the figures). The torsion bar 106 is inserted into the central holes of the input shaft 102 and the output shaft 103, and one end thereof is connected to the input shaft 102 and the connecting shaft 108 by means of a pin 109, while the other end thereof is connected to the output shaft 103 by means of a pin or the like (not shown in the figures). As a result, the input shaft 102 and the output shaft 103 are coaxially connected by the torsion bar 106 so that elastic relative rotation between these shafts is generated in accordance with the steering torque. A worm wheel 110a is fitted to the outer circumference of the output shaft 103, and a worm 110b which engages with this worm wheel 110a is driven by a motor 120 (actuator for generating steering assist force) attached to the housing 107.

A first detection tube 111 (first rotating element) made of magnetic material covers the outer circumference of the input shaft 102, and is rotatably supported by the housing 107 via a bearing 122 coaxially with the input and output shafts 102 and 103, so that the first detection tube 111 can rotate relatively to the input shaft 102 and output shaft 103 coaxially. A tubular magnetic leakage preventing member 121 made of non-magnetic material is integrated with the outer circumference of the input shaft 102, and a second detection tube 112 (second rotating element) made of magnetic material is integrated with the outer circumference of the magnetic leakage preventing member 121; therefore the second detection tube 112 rotates together with the input shaft 102. A third detection tube 115 made of magnetic material is integrated with the outer circumference of the input shaft 102 by press fitting or the like so as to rotate together with the input shaft 102. One end of the second detection tube 112 is disposed so as to face one end of the first detection tube 111 with a gap δ 1. The other end of the second detection tube 112 is disposed so as to face one end of the third detection tube 115 with a gap of δ 2. A plurality of teeth 111a, 112a and 115a which are arranged along the circumferential direction are disposed on the one end of the first detection tube 111, on the one end of the second detection tube 112, and on the one end of the third detection tube 115. The other end of the second detection tube 112 is formed as a flat surface. Furthermore, the magnetic leakage preventing member 121 is molded by pouring synthetic resin into a mold, and the input shaft 102 and the second detection tube 112 are inserted into the mold prior to the pouring of the synthetic resin, thus the input shaft 102 and the second tube 112 are integrated with the molded magnetic leakage preventing member 121 so as to rotate together with this member 121.

A first coil 116 and a second coil 118 which cover the input and output shafts 102 and 103 are held in a holder 117 made of magnetic material held by the housing 107. The first coil 116 generates magnetic flux which passes through the one end of the first detection tube 111 and the one end of the second detection tube 112, so that a first magnetic circuit is formed. The second coil 118 generates magnetic flux which passes through the other end of the second detection tube 112 and the one end of the third detection tube 115, so that a second magnetic circuit is formed.

A detection circuit which is connected to the respective coils 116 and 118 is disposed on a circuit board 130. Fig. 8 shows one example of the detection circuit. The first coil 116 is connected to an oscillator 143 via a resistor 142, and the second coil 118 is connected to the oscillator 143 via a resistor 144. Furthermore, the first coil 116 is connected to the inverted input terminal of an operational amplifier 145, and the second coil 118 is connected to the non-inverted input terminal of this operational amplifier 145. During the transmission of torque by both shafts 102 and 103, the torsion bar 106 is twisted in accordance with this torque, so that the first detection tube 111 rotates relatively to the second detection tube 112 coaxially. As a result of this relative rotation, the area of the portion where the teeth 111a on the one end of the first detection tube 111 and the teeth 112a on the one end of the second detection tube 112 overlap in the axial direction varies; therefore the magnetic resistance to the magnetic flux passing through the first magnetic circuit varies in accordance with the amount of elastic relative rotation between the two shafts 102 and 103 caused by the variation in the torque. The output of the first coil 116 varies in accordance with this variation. Since the second detection tube 112 and the third detection tube 115 rotate together, the magnetic resistance to the magnetic flux passing through the second magnetic circuit is not caused to fluctuate by the variation in the torque transmitted by the two shafts 102 and 103. When torque is not being transmitted by the two shafts 102 and 103, the magnetic resistance in the first magnetic circuit is set equal to the magnetic resistance in the second magnetic circuit. As a result, a detection signal of the torque transmitted by the input and output shafts 102 and 103 is generated by the detection circuit, on the basis of the output of the first coil 116 caused by the variation in the magnetic resistance in the first magnetic circuit. Furthermore, since the magnetic resistance in the second magnetic circuit through which the magnetic flux generated by the second coil 118 passes does not fluctuate according to the variation in the torque transmitted by the input and output shafts 102 and 103, fluctuations in the output of the first coil 116 and fluctuations in the output of the second coil 118 caused by temperature fluctuations are canceled in the operational amplifier 145. Specifically, the torque transmitted by the two shafts 102 and 103 is detected on the basis of the deviation between a value corresponding to the variation in the magnetic resistance to the magnetic flux passing through the first magnetic circuit and a value corresponding to the variation in the magnetic resistance to the magnetic flux passing through the second magnetic circuit, furthermore, fluctuations in the detected torque due to temperature is compensated. This torque detection signal is sent to a control device 131 connected to the detection circuit on the circuit board 130, and this control device 131 drives the motor 120 for generating steering assist force in accordance with the detected torque, so that steering assist force is applied. Specifically, a control mechanism which controls the motor 120 so that steering assist force corresponding to the relative rotation angle between the two detection tubes 111 and 112 caused by the steering torque is generated is constituted by the detection circuit on the circuit board and the control device 131. Furthermore, it is also possible to connect a detection sensor which detects a driving condition of the vehicle such as vehicle speed, steering angle or the like to the control device 131 so as to control the steering assist force in accordance with the driving condition other than the steering torque as well, so that the running stability at high vehicle speeds and the steering performance at low vehicle speeds are improved.

A rotation conversion mechanism 150 which converts the relative rotation of the input shaft 102 to the output shaft 103 into relative rotation of the first detection tube 111 to the output shaft 103 is provided. As in the abovementioned modification, the rotation conversion mechanism 150 has an input side gear 151, a driven side gear 153 and an intermediate gear 154 as a reversing element. The input side gear 151 is formed as a spur gear having external teeth integrated with the outer circumference of the input shaft 102 so as to rotate together with the input shaft 102. The driven side gear 153 is formed as a spur gear having internal teeth integrated with the inner circumference of the first detection tube 111 so as to rotate together with the first detection tube 111. The intermediate gear 154 is formed as a spur gear which engages with the input side gear 151 and the driven side gear 153, and is integrated with a supporting shaft 152 which is rotatably supported by the output shaft 103 via a bearing 156. The intermediate gear 154 is thus supported by the output shaft 103 so as to be able to rotate about an axis parallel to the axis of the input and output shafts 102 and 103. As a result, since the intermediate gear 154 engaged with the input side gear 151 which rotates together with the input shaft 102 is rotatably supported by the input shaft 103, the intermediate gear 154 rotates by the relative rotation between the input and output shafts 102 and 103, and the driven side gear 153 engaged with the intermediate gear 154 rotates together with the first detection tube 111. Specifically, the relative rotation of the input shaft 102 to the output shaft 103 is converted into relative rotation of the first detection tube 111 to the output shaft 103 by the intermediate gear 154, here the direction of rotation is reversed. As a result, the direction of relative rotation of the input shaft 102 to the output shaft 103 and the direction of relative rotation of the first detection tube 111 to the output shaft 103 are mutually opposite directions. Accordingly, the first detection tube 111 rotates relatively to the second detection tube 112. Furthermore, the ratio of the amount of relative rotation between the two detection tubes 111 and 112 to the amount of relative rotation between the input and output shafts 102 and 103 is an invariable fixed value which is determined by the numbers of teeth of the respective gears 151, 153 and 154.

In the abovementioned second embodiment, the direction of relative rotation of the input shaft 102 which constitutes the force point to the output shaft 103 which constitutes the fulcrum of the intermediate gear 154 and the direction of relative rotation of the first detection tube 111 which constitutes the action point of the intermediate gear 154 to the output shaft 103 are mutually opposite directions. Accordingly, since the relative rotation angle between the two detection tubes 111 and 112 can be increased without increasing the relative rotation angle between the input and output shafts 102 and 103, so that the running stability of the vehicle is improved both during straight forward motion and during turning motion by increasing the rigidity of the torsion bar 106. Moreover, since there is no decrease in the ratio of the variation in the steering assist force to the variation in the steering torque, the feeling of steering operation can be improved by quick steering assist. In addition, since the ratio of the amount of relative rotation between the two detection tubes 111 and 112 to the amount of relative rotation between the input and output shafts 102 and 103 is an invariable fixed value, the structure used for rotation conversion can be simplified, so that this rotation conversion can be smoothly performed, and quick steering assist can be accomplished to improve the feeling of steering operation.

The present invention is not limited to the abovementioned embodiments. For example, in the first embodiment and modification, a known technique can be applied; wherein the throttle parts in the flow passages between the outer valve element and the inner valve element can be formed as a plurality of different types of throttle parts, each closing angle of which corresponding to the relative rotation angle between the two valve elements up to the point of closing of the throttle parts is different from each other, a variable throttle valve is disposed between the throttle parts having large closing angle and the tank, and the degree of opening of this variable throttle valve is controlled in accordance with the vehicle speed so that the required force for steering operation is reduced at low vehicle speeds and increased at medium and high speed. As a result, the required force for steering operation is reduced at low vehicle speeds, and the running stability of the vehicle both during straight forward motion and during turning motion is improved at from low to high vehicle speeds, thus it is possible to obtain very stable feeling in the steering operation. Furthermore, the same rotation conversion mechanism in the first embodiment can be adopted in the second embodiment.

## Claims

1. A power steering apparatus comprising:
an input shaft (2);
an output shaft (3);
a torsion bar (6) which connects said input shaft (2) with said output shaft (3) coaxially so that elastic relative rotation between these shafts is generated in accordance with steering torque;
an actuator (20) for generating steering assist force;
a first rotating element (31) which is capable of relative coaxial rotation to said input and output shafts (2, 3);
a second rotating element (32) which rotates together with said input shaft (2);
a rotation conversion mechanism (50) which converts the relative rotation of said input shaft (2) to said output shaft (3) into relative rotation of said first rotating element (31) to said output shaft (3); and
a control mechanism (30) which controls said actuator (20) so that steering assist force corresponding to the relative rotation angle between said two rotating elements is generated, wherein
said rotation conversion mechanism (50) has a reversing element (54,) which is supported by said output shaft (3);
when the relative rotation of said input shaft (2) to said output shaft (3) is converted into relative rotation of said first rotating element (31) to said output shaft (3), the direction of rotation is reversed by said reversing element (54), so that the direction of relative rotation of said input shaft (2) to said output shaft (3) and the direction of relative rotation of said first rotating element (31) to said output shaft (3) are mutually opposite directions;
**characterized in that**
the ratio of the amount of relative rotation between said two rotating elements to the amount of relative rotation between said input and output shafts (2, 3) is set as an invariable fixed value, wherein
said first rotating element (31) has a tubular shape,
said second rotating element (32) is fitted in said first rotating element (31) so that relative coaxial rotation is possible,
said rotation conversion mechanism (50) has a first supporting part (51) integrated with said input shaft (2) so as to rotate together, a second supporting part (52) integrated with said output shaft (3) so as to rotate together, and a third supporting part (53) integrated with said first rotating element (31) so as to rotate together,
the respective supporting parts are spaced from each other in the axial direction of said input and output shafts (2, 3),
a swinging member is provided as said reversing element (54),
said swinging member is supported by said first supporting part (51) so as to swing in accordance with the relative rotation between said input and output shafts (2, 3), supported by said output shaft (3) via said second supporting part (52), and supported by said third supporting part (53) so as to cause said first rotating element (31) to rotate relatively to said second rotating element (32) by swinging thereof, and
said second supporting part (52) is disposed between said first supporting part (51) and said third supporting part (53) in the axial direction of said input and output shafts (2, 3).

2. A power steering apparatus comprising:
an input shaft (2, 102);
an output shaft (3, 103);
a torsion bar (6, 106) which connects said input shaft (2, 102) with said output shaft (3, 103) coaxially so that elastic relative rotation between these shafts is generated in accordance with steering torque;
an actuator (20, 120) for generating steering assist force;
a first rotating element (31, 111) which is capable of relative coaxial rotation to said input and output shafts (2, 102, 3, 103);
a second rotating element (32, 112) which rotates together with said input shaft (2, 102);
a rotation conversion mechanism (50', 150) which converts the relative rotation of said input shaft (2, 102) to said output shaft (3, 103) into relative rotation of said first rotating element (31, 111) to said output shaft (3, 103); and
a control mechanism (30, 131) which controls said actuator (20, 120) so that steering assist force corresponding to the relative rotation angle between said two rotating elements is generated, wherein
said rotation conversion mechanism (50', 150) has a reversing element (54', 154) which is supported by said output shaft (3, 103);
when the relative rotation of said input shaft (2, 102) to said output shaft (3, 103) is converted into relative rotation of said first rotating element (31, 111) to said output shaft (3, 103), the direction of rotation is reversed by said reversing element (54' 154), so that the direction of relative rotation of said input shaft (2, 102) to said output shaft (3, 103) and the direction of relative rotation of said first rotating element (31, 111) to said output shaft (3, 103) are mutually opposite directions;
**characterized in that** the ratio of the amount of relative rotation between said two rotating elements to the amount of relative rotation between said input and output shafts (2, 102, 3, 103) is set as an invariable fixed value, wherein
said rotation conversion mechanism (50', 150) has an input side gear (51', 151) which rotates together with said input shaft (2, 102), and a driven side gear (53', 153) which rotates together with said first rotating element (31, 111); and
an intermediate gear which engages with said input side gear (51', 151) and said driven side gear (53', 153) is provided as said reversing element (54',154) so as to be rotatably supported by said output shaft (3, 103).

## Patentansprüche

1. Servolenkvorrichtung, die folgendes aufweist:
eine Eingangswelle (2);
eine Ausgangswelle (3);
einen Torsionsstab (6), der die Eingangswelle (2) mit der Ausgangswelle (3) koaxial verbindet, so dass zwischen diesen Wellen eine elastische relative Drehung gemäß dem Lenkmoment erzeugt wird;
ein Stellglied (20) zum Erzeugen einer Lenkhilfskraft;
ein erstes Drehelement (31), das zu einer relativen koaxialen Drehung zu der Eingangs- und der Ausgangswelle (2, 3) fähig ist;
ein zweites Drehelement (32), das sich zusammen mit der Eingangswelle (2) dreht;
einen Drehumwandlungsmechanismus (50), der die relative Drehung der Eingangswelle (2) zu der Ausgangswelle (3) in eine relative Drehung des ersten Drehelements (31) zu der Ausgangswelle (3) umwandelt; und
einen Steuermechanismus (30), der das Stellglied (20) so steuert, dass zwischen den zwei Drehelementen eine Lenkhilfskraft entsprechend dem relativen Drehwinkel erzeugt wird, wobei
der Drehumwandlungsmechanismus (50) ein Umkehrelement (54) hat, das durch die Ausgangswelle (3) gelagert ist;
wenn die relative Drehung der Eingangswelle (2) zu der Ausgangswelle (3) in eine relative Drehung des ersten Drehelements (31) zu der Ausgangswelle (3) umgewandelt wird, die Drehrichtung durch das Umkehrelement (54) umgekehrt wird, so dass die Richtung einer relativen Drehung der Eingangswelle (2) zu der Ausgangswelle (3) und die Richtung einer relativen Drehung des ersten Drehelements (31) zu der Ausgangswelle (3) wechselseitig entgegengesetzte Richtungen sind;
**dadurch gekennzeichnet, dass**
das Verhältnis des Ausmaßes einer relativen Drehung zwischen den zwei Drehelementen zu dem Ausmaß einer relativen Drehung zwischen der Eingangs- und der Ausgangswelle (2, 3) als invariabler fester Wert eingestellt ist, wobei
das erste Drehelement (31) rohrförmig ist,
das zweite Drehelement (32) in das erste Drehelement (31) eingepasst ist, so dass eine relative koaxiale Drehung möglich ist,
der Drehumwandlungsmechanismus (50) ein erstes Stützteil (51) hat, das mit der Eingangswelle (2) integriert ist, um sich zusammen zu drehen, ein zweites Stützteil (52), das mit der Ausgangswelle (3) integriert ist, um sich zusammen zu drehen, und ein drittes Stützteil (53), das mit dem ersten Drehelement (31) integriert ist, um sich zusammen zu drehen,
die jeweiligen Stützteile in der axialen Richtung der Eingangs- und der Ausgangswelle (2, 3) voneinander beabstandet sind,
ein Schwingelement als das Umkehrelement (54) vorgesehen ist,
das Schwingelement durch das erste Stützteil (51) gestützt ist, um gemäß der relativen Drehung zwischen der Eingangs- und der Ausgangswelle (2, 3) zu schwingen, durch die Ausgangswelle (3) über das zweite Stützteil (52) gestützt ist und durch das dritte Stützteil (53) gestützt ist, um zu veranlassen, dass sich durch sein Schwingen das erste Drehelement (31) relativ zu dem zweiten Drehelement (32) dreht, und
das zweite Stützteil (52) zwischen dem ersten Stützteil (51) und dem dritten Stützteil (53) in der axialen Richtung der Eingangs- und der Ausgangswelle (2, 3) angeordnet ist.

2. Servolenkvorrichtung, die folgendes aufweist:
eine Eingangswelle (2, 102);
eine Ausgangswelle (3, 103);
einen Torsionsstab (6, 106), der die Eingangswelle (2, 102) mit der Ausgangswelle (3, 103) koaxial verbindet, so dass zwischen diesen Wellen eine elastische relative Drehung gemäß dem Lenkmoment erzeugt wird;
ein Stellglied (20, 120) zum Erzeugen einer Lenkhilfskraft;
ein erstes Drehelement (31, 111), das zu einer relativen koaxialen Drehung zu der Eingangs- und der Ausgangswelle (2, 102, 3, 103) fähig ist;
ein zweites Drehelement (32, 112), das sich zusammen mit der Eingangswelle (2, 102) dreht;
einen Drehumwandlungsmechanismus (50', 150), der die relative Drehung der Eingangswelle (2, 102) zu der Ausgangswelle (3, 103) in eine relative Drehung des ersten Drehelements (31, 111) zu der Ausgangswelle (3, 103) umwandelt; und
einen Steuermechanismus (30, 131), der das Stellglied (20, 120) so steuert, dass zwischen den zwei Drehelementen eine Lenkhilfskraft entsprechend dem relativen Drehwinkel erzeugt wird, wobei
der Drehumwandlungsmechanismus (50', 150) ein Umkehrelement (54', 154) hat, das durch die Ausgangswelle (3, 103) gelagert ist;
wenn die relative Drehung der Eingangswelle (2, 102) zu der Ausgangswelle (3, 103) in eine relative Drehung des ersten Drehelements (31, 111) zu der Ausgangswelle (3, 103) umgewandelt wird, die Drehrichtung durch das Umkehrelement (54', 154) umgekehrt wird, so dass die Richtung einer relativen Drehung der Eingangswelle (2, 102) zu der Ausgangswelle (3, 103) und die Richtung einer relativen Drehung des ersten Drehelements (31, 111) zu der Ausgangswelle (3, 103) wechselseitig entgegengesetzte Richtungen sind;
**dadurch gekennzeichnet, dass**
das Verhältnis des Ausmaßes einer relativen Drehung zwischen den zwei Drehelementen zu dem Ausmaß einer relativen Drehung zwischen der Eingangs- und der Ausgangswelle (2, 102, 3, 103) als invariabler fester Wert eingestellt ist, wobei
der Drehumwandlungsmechanismus (50', 150) ein eingangsseitiges Zahnrad (51', 151) hat, das sich zusammen mit der Eingangswelle (2, 102) dreht, und ein abtriebsseitiges Zahnrad (53', 153), das sich zusammen mit dem ersten Drehelement (31, 111) dreht; und
ein mittleres Zahnrad, das mit dem eingangsseitigen Zahnrad (51' 151) und dem abtriebsseitigen Zahnrad (53', 153) in Eingriff steht, als das Umkehrelement (54', 154) derart vorgesehen ist, dass es durch die Ausgangswelle (3, 103) drehbar gelagert ist.

## Revendications

1. Un appareil de direction assistée comprenant:
un arbre d'entrée (2) ;
un arbre de sortie (3) ;
une barre de torsion (6) qui relie ledit arbre d'entrée (2) audit arbre de sortie (3) de manière coaxiale de sorte qu'est générée une rotation relative élastique entre ces arbres en fonction du couple de direction ;
un actionneur (20) pour générer une force de direction assistée ;
un premier élément rotatif (31) qui est capable d'une rotation coaxiale relative par rapport auxdits arbres d'entrée et de sortie (2, 3) ;
un second élément rotatif (32) qui tourne ensemble avec ledit arbre d'entrée (2) ;
un mécanisme de conversion de rotation (50) qui convertit la rotation relative dudit arbre d'entrée (2) par rapport audit arbre de sortie (3) en rotation relative dudit premier élément rotatif (31) par rapport audit arbre de sortie (3) ; et
un mécanisme de commande (30) qui commande ledit actionneur (20) de sorte qu'est générée une force de direction assistée correspondant à l'angle de rotation relative entre lesdits deux éléments rotatifs, dans lequel
ledit mécanisme de conversion de rotation (50) a un élément d'inversion (54) qui est supporté par ledit arbre de sortie (3),
lorsque la rotation relative dudit arbre d'entrée (2) par rapport audit arbre de sortie (3) est convertie en rotation relative dudit premier élément rotatif (31) par rapport audit arbre de sortie (3), la direction de rotation est inversée par ledit élément d'inversion (54),
de sorte que la direction de rotation relative dudit arbre d'entrée (2) par rapport audit arbre de sortie (3) et la direction de rotation relative dudit premier élément rotatif (31) par rapport audit arbre de sortie (3) sont des directions mutuellement opposées ;
**caractérisé en ce que**
le rapport entre la quantité de rotation relative entre lesdits deux éléments rotatifs et la quantité de rotation relative entre lesdits arbres d'entrée et de sortie (2, 3) est fixé à une valeur fixe invariable, dans lequel
ledit premier élément rotatif (31) est de forme tubulaire,
ledit second élément rotatif (32) est inséré dans ledit premier élément rotatif (31) de sorte qu'une rotation coaxiale relative est possible,
ledit mécanisme de conversion de rotation (50) a une première partie de support (51) intégrée audit arbre d'entrée (2) de manière à tourner ensemble, une seconde partie de support (52) intégrée audit arbre de sortie (3) de manière à tourner ensemble, et une troisième partie de support (53) intégrée audit premier élément rotatif (31) de manière à tourner ensemble,
les parties de support respectives sont espacées l'une de l'autre dans la direction axiale desdits arbres d'entrée et de sortie (2, 3),
un élément oscillant est prévu en tant que dit élément d'inversion (54),
ledit élément oscillant est supporté par ladite première partie de support (51) de manière à osciller en fonction de la rotation relative entre lesdits arbres d'entrée et de sortie (2, 3), supporté par ledit arbre de sortie (3) via ladite seconde partie de support (52), et supporté par ladite troisième partie de support (53) de manière à causer la rotation dudit premier élément rotatif (31) par rapport audit second élément rotatif (32) par l'oscillation de celui-ci, et
ladite seconde partie de support (52) est disposée entre ladite première partie de support (51) et ladite troisième partie de support (53) dans la direction axiale desdits arbres d'entrée et de sortie (2, 3).

2. Appareil de direction assistée, comprenant :
un arbre d'entrée (2, 102) ;
un arbre de sortie (3, 103) ;
une barre de torsion (6, 106) qui relie ledit arbre d'entrée (2, 102) audit arbre de sortie (3, 103) de manière coaxiale de sorte qu'est générée une rotation relative élastique entre ces arbres en fonction du couple de direction ;
un actionneur (20, 120) pour générer une force de direction assistée;
un premier élément rotatif (31, 111) qui est capable d'une rotation coaxiale relative par rapport auxdits arbres d'entrée et de sortie (2, 102, 3, 103) ;
un second élément rotatif (32, 112) qui tourne ensemble avec ledit arbre d'entrée (2, 102) ;
un mécanisme de conversion de rotation (50', 150) qui convertit la rotation relative dudit arbre d'entrée (2, 102) par rapport audit arbre de sortie (3, 103) en rotation relative dudit premier élément rotatif (31, 111) par rapport audit arbre de sortie (3, 103) ; et
un mécanisme de commande (30, 131) qui commande ledit actionneur (20, 120) de sorte qu'est générée une force de direction assistée correspondant à l'angle de rotation relative entre lesdits deux éléments rotatifs, dans lequel,
ledit mécanisme de conversion de rotation (50', 150) a un élément d'inversion (54', 154) qui est supporté par ledit arbre de sortie (3, 103),
lorsque la rotation relative dudit arbre d'entrée (2, 102) par rapport audit arbre de sortie (3, 103) est convertie en rotation relative dudit premier élément rotatif (31, 111) par rapport audit arbre de sortie (3, 103), la direction de rotation est inversée par ledit élément d'inversion (54', 154), de sorte que la direction de rotation relative dudit arbre d'entrée (2, 102) par rapport audit arbre de sortie (3, 103) et la direction de rotation relative dudit premier élément rotatif (31, 111) par rapport audit arbre de sortie (3, 103) sont des directions mutuellement opposées;
**caractérisé en ce que**
le rapport entre la quantité de rotation relative entre lesdits deux éléments rotatifs et la quantité de rotation relative entre lesdits arbres d'entrée et de sortie (2, 102, 3, 103) est fixé à une valeur fixe invariable, dans lequel.
ledit mécanisme de conversion de rotation (50', 150) a un planétaire d'entrée (51', 151) qui tourne ensemble avec ledit arbre d'entrée (2, 102), et un planétaire mené (53', 153) qui tourne ensemble avec ledit premier élément rotatif (31, 111) ; et
une roue intermédiaire qui entre en prise avec ledit planétaire d'entrée (51', 151) et ledit planétaire mené (53', 153) est prévue en tant que dit élément d'inversion (54', 154) de manière à être supportée en rotation par ledit arbre de sortie (3, 103).
